# EUROPEAN PATENT APPLICATION

(11) **EP 2 594 439 A1**
(43) Date of publication of application: **22.05.2013**
(21) Application number: 11189386.3
(22) Date of filing: 16.11.2011
(51) Int. Cl.: B60R 21/0132

(54) **Arrangement and method for occupant restraint and protection**

(71) Applicant: Volvo Car Corporation, 40531 Göteborg (SE)
(72) Inventor: Ask, Martin, 42356 Torslanda (SE); Wogel, Anders, Harrington Park, NJ 07640 (US); Heurlin, Fredrik, 42353 Torslanda (SE); Nilsson, Pär, 41671 Göteborg (SE); Axelsson, Anders, 42341 Torslanda (SE); Hardå, Peter, 41324 Göteborg (SE)

(57) **Abstract**

Embodiments herein relate to an occupant restraint and protection arrangement (1) for an automotive vehicle (2) as well as a method for improving the performance of such an occupant restraint and protection arrangement (1) for an automotive vehicle (2). The automotive vehicle (2) has at least one seatbelt (3) for restraining an occupant (4) of the automotive vehicle (2) to protect the occupant (4). The arrangement (1) further comprises a pyrotechnic seatbelt retractor (5) arranged to, upon activation thereof, retract the seatbelt (3), and control means (6) for controlling activation of the pyrotechnic seatbelt retractor (5). Off road traveling determining means (7) are provided, for determining traveling of the automotive vehicle (2) off road. Notifying means (8) are provided, for notifying the control means (6) of traveling of the automotive vehicle (2) off road. The control means (6) is responsive to notifying from the off road traveling notifying means (8) of traveling of the automotive vehicle (2) off road, for activating the pyrotechnic seatbelt retractor (5) to retract the seatbelt (3).

## Description

### Technical field

Embodiments herein relate to an occupant restraint and protection arrangement for an automotive vehicle having at least one seatbelt for restraining an occupant of the automotive vehicle to protect the occupant in accordance with the preamble of claim 1.

Embodiments herein further relate to a method for improving the performance of an occupant restraint and protection arrangement for an automotive vehicle having at least one seatbelt for restraining an occupant of the automotive vehicle to protect the occupant in accordance with the preamble of claim 6.

### Background

The World Health Organization estimates that traffic accidents annually cause 1.2 million fatalities and as many as 50 million injuries. It is predicted that these figures will increase by 65% over the next 20 years unless there is new commitment to prevention.

Despite these large numbers, traffic conflicts are rare events for individuals. Fortunately, most drivers are generally good at foreseeing and avoiding potential accidents. However, no human is perfect and a slight distraction or misjudgment may result in an accident. Even if a driver should act perfectly, there is still a possibility that another road user makes a mistake that puts the driver in a situation where an accident cannot be avoided.

In order to improve automotive vehicle occupant safety in case of an accident most automotive vehicles today include occupant restraint and protection apparatuses which are operable upon a large deceleration of the automotive vehicle, such as a collision, to restrain an occupant by means of a seatbelt to prevent the occupant from being thrown out of its seat.

The conventional automotive restraint and protection apparatuses include a type provided with a seatbelt retractor for retracting or winding a seatbelt. Such a seatbelt retractor is generally provided with bias force imparting means, such as a spiral spring, which always biases a take up shaft on which the seatbelt is wound in a retracting direction. The seatbelt is wound up on the shaft due to the bias force given by the bias force imparting means when it is not mounted on the occupant, and it is protracted or withdrawn against the bias force to fasten or restrain the occupant when it is to be mounted on the occupant.

Such a seatbelt retractor is usually provided with emergency locking means which is normally actuated upon a large deceleration of the vehicle, to impede rotation of the shaft in the seatbelt protracting direction, so as for the seatbelt to surely restrain and protect the occupant during a collision event.

In order to improve this function of surely restraining the occupant during a collision event it is further known to provide an automotive occupant restraint and protection apparatus with an airbag device for restraining an occupant through expansion of an airbag, a pyrotechnic belt pretensioner for restraining the occupant by suddenly retracting a seatbelt, an airbag and pretensioner controller for controlling actuation time of the airbag and the pretensioner, and a sensor for detecting negative acceleration acted upon the occupant upon a collision of the automotive vehicle.

When negative acceleration acted upon the occupant is detected by the sensor upon a collision of the automotive vehicle, a signal indicative of the negative acceleration from the sensor is delivered to the airbag and pretensioner controller, which in turn controls the actuation time of the airbag and the pretensioner, whereupon the airbag and the pretensioner are actuated.

However, prior to a collision of the automotive vehicle it is not uncommon that the automotive vehicle deviates from the road travelled, whereupon ensues a sometimes rough and bumpy ride preceding an actual collision. During such an event an occupant is likely to experience being projected against parts of the automotive vehicle interior panels as well as adjacent co-occupants which may potentially result in injuries to the automotive vehicle occupant as well as to co-occupants thereof.

### Summary

Embodiments herein aim to provide an occupant restraint and protection arrangement for an automotive vehicle having at least one seatbelt for restraining an occupant of the automotive vehicle to protect the occupant and a method for improving the performance of such an occupant restraint and protection arrangement.

This is provided by an arrangement comprising: a pyrotechnic seatbelt retractor arranged to, upon activation thereof, retract the seatbelt; and control means for controlling activation of the pyrotechnic seatbelt retractor; off road traveling determining means, for determining traveling of the automotive vehicle off road; and notifying means, for notifying the control means of traveling of the automotive vehicle off road; wherein the control means is responsive to notifying from the off road traveling notifying means of traveling of the automotive vehicle off road, for activating the pyrotechnic seatbelt retractor to retract the seatbelt.

The provision of means for activating the pyrotechnic seatbelt retractor to retract the seatbelt upon determining traveling of the automotive vehicle off road ensures that the seatbelts of the automotive vehicle does not slide of a driver or passenger of the automotive vehicle allowing them to move to an incorrect position where the risk for injuries is increased when the vehicle goes off road. It further ensures that, if the off road driving is followed by a collision that deploys normal airbags, the driver/passenger of the automotive vehicle will be correctly positioned to be protected by the airbags deployed.

According to a second aspect the off road traveling determining means comprises means for analyzing signals from various vehicle sensors for determining traveling of the automotive vehicle off road.

According to a third aspect the off road traveling determining means comprises means for analyzing signals from vehicle sensors, such as accelerometers, gyros and speedometers for determining traveling of the automotive vehicle off road.

According to a fourth aspect the off road traveling determining means comprises means for analyzing signals from vehicle sensors comprising information on at least one of automotive vehicle yaw rate, roll rate and pitch for determining traveling of the automotive vehicle off road.

The provision of means for analyzing signals from vehicle sensors, as described for the second, third and fourth aspect, enables use of common sensors possibly already present in the vehicle, such as accelerometers, gyros and speedometers providing information such as vehicle yaw rate, roll rate and pitch for determining traveling of the automotive vehicle off road, which provides for cost efficient integration of the arrangement to current automotive vehicle designs.

According to a fifth aspect the off road traveling determining means are arranged to determine traveling of the automotive vehicle off road if quantifiable information from one or more vehicle sensors exceeds a predetermined threshold value during a predetermined time period.

Determination using a predetermined threshold value and a predetermined time period, as described for the fifth aspect, provides for precisely tuning the degree of rough riding accepted as well as an allowable duration thereof.

The method provides for the same advantages as described above for aspects of the arrangement.

### Brief description of the drawings

In the following, embodiments herein will be described in greater detail by way of example only with reference to attached drawings, in which
Fig. 1 is a schematic illustration of an embodiment of an occupant restraint and protection arrangement for an automotive vehicle according to embodiments hereof.
Fig. 2 is a schematic flow diagram illustrating a method for improving the performance of an occupant restraint and protection arrangement for an automotive vehicle according to embodiments hereof.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

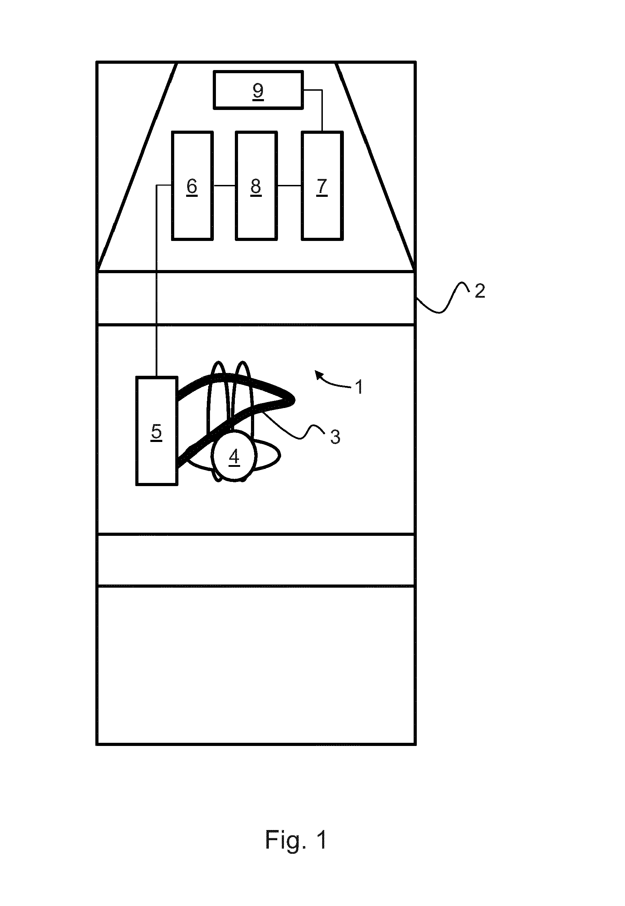

In overview, embodiments herein, as shown schematically in figure 1, relate to an occupant restraint and protection arrangement 1 for an automotive vehicle 2 having at least one seatbelt 3 for restraining an occupant 4 of the automotive vehicle 2 to protect the occupant 4.

The arrangement 1 aims to ensure that the seatbelts 3 of an automotive vehicle 2 does not slide of an occupant 4 of the automotive vehicle 2, such as a driver or passenger, allowing the occupant 4 to move to an incorrect position where the risk for injuries is increased should the automotive vehicle 2 be subjected to off road travel prior to a potential collision. The arrangement 1 further ensures that, if the off road driving is followed by a crash that deploy any airbags present in the automotive vehicle 2, the occupant 4 of the automotive vehicle 2 will be correctly positioned to be protected by the airbags deployed. As a result, the occupant 4 can be positively protected even during traveling of the automotive vehicle 2 off road.

The arrangement 1 has at least one seatbelt 3 for restraining an occupant 4 of the automotive vehicle 2 to protect the occupant 4. The arrangement 1 further comprises a pyrotechnic seatbelt retractor 5 arranged to, upon activation thereof, retract the seatbelt 3. Control means 6 are provided for controlling activation of the pyrotechnic seatbelt retractor 5.

Although the following description may refer to details in singular form it should be clear to the person skilled in the art that several details may be present also in plural form. Thus, the occupant restraint and protection arrangement 1 for an automotive vehicle 2 may include one or more of the following: a seatbelt 3, such as a three-point seatbelt, one or more airbags (not shown), (driver and passenger; front and/or side) and a pyrotechnic seatbelt pretensioner 5.

The arrangement 1 further comprises off road traveling determining means 7, for determining traveling of the automotive vehicle 2 off road.

In embodiments the off road traveling determining means 7 comprises means for analyzing signals from various vehicle sensors 9 for determining traveling of the automotive vehicle 2 off road. In further embodiments the off road traveling determining means 7 comprises means for analyzing signals from vehicle sensors 9, such as accelerometers, gyros and speedometers for determining traveling of the automotive vehicle 2 off road. In still further embodiments the off road traveling determining means 7 comprises means for analyzing signals from vehicle sensors 9 comprising information on at least one of automotive vehicle 2 yaw rate, roll rate and pitch for determining traveling of the automotive vehicle 2 off road.

Such means for analyzing signals from vehicle sensors 9 may comprise one or more microcomputers having associated software for performing the analysis upon being executed thereupon.

Further, it is possible to use common sensors 9 possibly already present in the automotive vehicle 2 with the means for determining traveling of the automotive vehicle off road 7. Examples of suitable sensors 9 are sensors such as accelerometers, gyros and speedometers. Suitable sensors 9 may provide information such as vehicle yaw rate, roll rate and pitch, which information may be used for determining traveling of the automotive vehicle 2 off road.

In yet further embodiments the off road traveling determining means 7 are arranged to determine traveling of the automotive vehicle 2 off road if quantifiable information from one or more vehicle sensors 9 exceeds a predetermined threshold value during a predetermined time period. Determination using a predetermined threshold value and a predetermined time period provides for precisely tuning the degree of rough riding accepted as well as an allowable duration thereof.

Use of sensors 9 of the above kind provides for cost efficient integration of the arrangement 1 to current as well as future automotive vehicle 2 designs.

Notifying means 8 are provided, for notifying the control means 6 of traveling of the automotive vehicle 2 off road. The control means 6 is responsive to notifying from the off road traveling notifying means 8 of traveling of the automotive vehicle 2 off road, for activating the pyrotechnic seatbelt retractor 5 to retract the seatbelt 3. The arrangement 1 thus ensures that the occupant 4 of the automotive vehicle 2 is retained in a secure position through tightening up the seatbelt 3, using the pyrotechnic seatbelt retractor 5, as the automotive vehicle 2 travels to an off road scenario.

Notifications may be carried to the control means 6 using conventional automotive vehicle signaling arrangements such as e.g. Controller Area Network (CAN) or Media Oriented Systems Transport (MOST) buses or similar, or alternatively carried by dedicated signaling arrangements, wired or wireless.

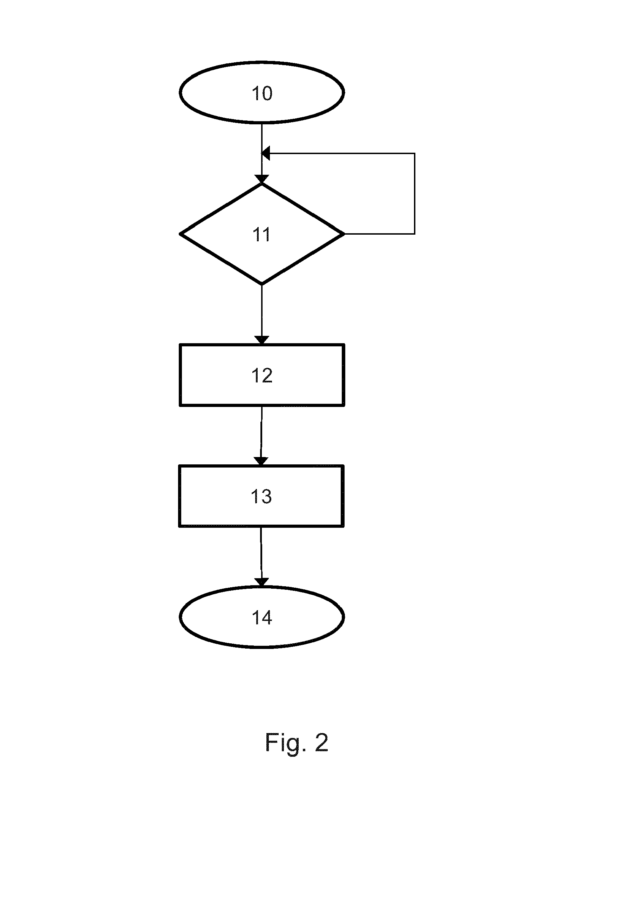

The present application also provides a method, as shown schematically in figure 2, for improving the performance of an occupant restraint and protection arrangement 1 for an automotive vehicle 2 having at least one seatbelt 3 for restraining an occupant 4 of the automotive vehicle 2 to protect the occupant 4. The method is useful where the arrangement further comprises a pyrotechnic seatbelt retractor 5 arranged to, upon activation thereof, retract the seatbelt 3, and control means 6 for controlling activation of the pyrotechnic seatbelt retractor 5.

The method, illustrated in figure 2, following initiation 10 comprises the steps of:
● Determining 11 traveling of the automotive vehicle 2 off road;
● Notifying 12 the control means 6 of traveling of the automotive vehicle 2 off road;
● Activating 13 the pyrotechnic seatbelt retractor 5 to retract the seatbelt 3 in response to the control means 6 being notified of traveling of the automotive vehicle 2 off road.

Following activation of the pyrotechnic seatbelt retractor 5 the method is terminated 14.

In embodiments of the method the step of determining 11 traveling of the automotive vehicle 2 off road further comprises analyzing signals from various vehicle sensors 9 for determining traveling of the automotive vehicle 2 off road.

In further embodiments of the method the step of determining 11 traveling of the automotive vehicle 2 off road further comprises analyzing signals from vehicle sensors 9, such as accelerometers, gyros and speedometers for determining traveling of the automotive vehicle 2 off road.

In yet further embodiments of the method the step of determining 11 traveling of the automotive vehicle 2 off road further comprises analyzing signals from vehicle sensors 9 comprising information on at least one of automotive vehicle 2 yaw rate, roll rate and pitch for determining traveling of the automotive vehicle 2 off road.

In still further embodiments of the method the step of determining 11 traveling of the automotive vehicle 2 off road further comprises determining traveling of the automotive vehicle 2 off road if quantifiable information from one or more vehicle sensors 9 exceeds a predetermined threshold value during a predetermined time period.

In accordance with the present application is also envisaged an automotive vehicle 2 comprising an arrangement 1 as described above.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. An occupant restraint and protection arrangement (1) for an automotive vehicle (2) having at least one seatbelt (3) for restraining an occupant (4) of the automotive vehicle (2) to protect the occupant (4), the arrangement (1) further comprising: a pyrotechnic seatbelt retractor (5) arranged to, upon activation thereof, retract the seatbelt (3); and control means (6) for controlling activation of the pyrotechnic seatbelt retractor (5), **characterized in that** it further comprises: off road traveling determining means (7), for determining traveling of the automotive vehicle (2) off road; and notifying means (8), for notifying the control means (6) of traveling of the automotive vehicle (2) off road; wherein the control means (6) is responsive to notifying from the off road traveling notifying means (8) of traveling of the automotive vehicle (2) off road, for activating the pyrotechnic seatbelt retractor (5) to retract the seatbelt (3).

2. An arrangement according to claim 1, **characterized in that** the off road traveling determining means (7) comprises means for analyzing signals from various vehicle sensors (9) for determining traveling of the automotive vehicle (2) off road.

3. An arrangement according to any one of claims 1 to 2, **characterized in that** the off road traveling determining means (7) comprises means for analyzing signals from vehicle sensors (9), such as accelerometers, gyros and speedometers for determining traveling of the automotive vehicle (2) off road.

4. An arrangement according to any one of claims 1 to 3, **characterized in that** the off road traveling determining means (7) comprises means for analyzing signals from vehicle sensors (9) comprising information on at least one of automotive vehicle (2) yaw rate, roll rate and pitch for determining traveling of the automotive vehicle (2) off road.

5. An arrangement according to claim 4, **characterized in that** the off road traveling determining means (7) are arranged to determine traveling of the automotive vehicle (2) off road if quantifiable information from one or more vehicle sensors (9) exceeds a predetermined threshold value during a predetermined time period.

6. A method for improving the performance of an occupant restraint and protection arrangement (1) for an automotive vehicle (2) having at least one seatbelt (3) for restraining an occupant (4) of the automotive vehicle (2) to protect the occupant (4), the arrangement (1) further comprising a pyrotechnic seatbelt retractor (5) arranged to, upon activation thereof, retract the seatbelt (3), and control means (6) for controlling activation of the pyrotechnic seatbelt retractor (5), **characterized in that** it comprises the steps of:
determining (11) traveling of the automotive vehicle (2) off road; notifying (12) the control means (6) of traveling of the automotive vehicle (2) off road; activating (13) the pyrotechnic seatbelt retractor (5) to retract the seatbelt (3) in response to the control means (6) being notified of traveling of the automotive vehicle (2) off road.

7. A method according to claim 6, **characterized in that** the step of determining (11) traveling of the automotive vehicle (2) off road further comprises analyzing signals from various vehicle sensors (9) for determining traveling of the automotive vehicle (2) off road.

8. A method according to any one of claims 6 to 7, **characterized in that** the step of determining (11) traveling of the automotive vehicle (2) off road further comprises analyzing signals from vehicle sensors (9), such as accelerometers, gyros and speedometers for determining traveling of the automotive vehicle (2) off road.

9. A method according to any one of claims 6 to 8, **characterized in that** the step of determining (11) traveling of the automotive vehicle (2) off road further comprises analyzing signals from vehicle sensors (9) comprising information on at least one of automotive vehicle (2) yaw rate, roll rate and pitch for determining traveling of the automotive vehicle (2) off road.

10. A method according to claim 9, **characterized in that** the step of determining (11) traveling of the automotive vehicle (2) off road further comprises determining traveling of the automotive vehicle (2) off road if quantifiable information from one or more vehicle sensors (9) exceeds a predetermined threshold value during a predetermined time period.

11. An automotive vehicle (2) **characterized in that** it comprises an arrangement (1) according to any one of claims 1 to 5.
